# EUROPÄISCHE PATENTSCHRIFT

(11) **EP 1 727 701 B1**
(45) Veröffentlichungstag und Bekanntmachung des Hinweises auf die Patenterteilung: **20.05.2009**
(21) Anmeldenummer: 05729777.2
(22) Anmeldetag: 11.03.2005
(51) Int. Cl.: B60K 35/00

(54) **STEUERUNGSSYSTEM FÜR EIN KRAFTFAHRZEUG**
MOTOR VEHICLE CONTROL SYSTEM
SYSTEME DE COMMANDE D'UN VEHICULE A MOTEUR

(30) Priorität: 19.03.2004 DE 102004013630
(43) Veröffentlichungstag der Anmeldung: 06.12.2006
(73) Patentinhaber: AUDI AG, 85045 Ingolstadt (DE); Volkswagen AG, 38436 Wolfsburg (DE)
(72) Erfinder: WILLE, Frank-Martin, 85080 Gaimersheim (DE); ESSER, Holger, 85049 Ingolstadt (DE); VASSEN, Heinz-Willi, 85114 Buxheim (DE); AMMLER, Tobias, 86673 Unterstall (DE); AMMLER, Norbert, 86673 Bergheim (DE); LEBMEIER, Helmut, 86571 Langenmosen (DE); GROSS, Yvonne, 66117 Saarbrücken (DE); JUNG, Hans-Christian, 85049 Ingolstadt (DE); LEINFELDER, Rudolf, 85072 Eichstätt (DE); KÖTZ, Jens, 85117 Eitensheim (DE); KRÖMKE, Carsten, 38126 Braunschweig (DE); ANDERLIK, Stefan, 14813 Zellendorf (DE); PENSHORN, Christian, 31234 Edemissen (DE); WENZEL, Matthias, 32756 Detmold (DE)
(74) Vertreter: Mader, Wilfried
(86) Internationale Anmeldenummer: PCT/EP2005/002574
(87) Internationale Veröffentlichungsnummer: WO 2005/092660

(56) Entgegenhaltungen:
- EP-A- 1 178 394
- DE-A1- 19 739 357

## Beschreibung

Die Erfindung betrifft ein Steuerungssystem für ein Kraftfahrzeug und ein Verfahren zur Steuerung eines Kraftfahrzeuges mit einer Ausgabesteuerung zur Ausgabe einer den Betrieb des Kraftfahrzeuges betreffenden Information und mit einer räumlich von der Ausgabesteuerung getrennten Funktionssteuerung zur Erzeugung und/oder Bereitstellung der den Betrieb des Kraftfahrzeuges betreffenden Information.

Aus der DE 100 44 892 A1 ist ein Verfahren zum Betrieb einer multifunktionalen Anzeigeeinrichtung in einem Kraftfahrzeug bekannt, bei welchem durch die Anwahl eines Menüpunktes jeweils eine Funktion oder ein Parameter angezeigt bzw. neu angezeigt wird, wobei die Dateninhalte oder Meldungen verschiedener Aggregate im Kraftfahrzeug in einem mit der Anzeigeeinrichtung bidirektional korrespondierenden Steuergerät abgespeichert werden, und wobei einer aktuell gewählten Anzeige ein Prioritätswert zugeordnet ist oder wird, welcher zyklisch an das Steuergerät zurückgesendet wird, so dass erst dann wieder ein anderer Dateninhalt angezeigt wird, wenn er gesondert angewählt wird oder einen höheren Prioritätswert hat.

Aus der DE 100 44 891 A1 ist ein Verfahren zum Betrieb einer multifunktionalen menügeführten Anzeigeeinrichtung in einem Kraftfahrzeug bekannt, bei welchem durch die Anwahl eines Menüpunktes jeweils eine Funktion oder ein Parameter angezeigt bzw. neu angezeigt wird, wobei die Dateninhalte von Anzeigen verschiedener Aggregate im Kraftfahrzeug in einem mit der Anzeigeeinrichtung bidirektional korrespondierenden Steuergerät funktions- und/oder aggregatbezogen gespeichert werden, wobei bei Anwahl eines Menüpunktes zunächst nur eine Kopfzeile eines Speicherinhaltes angezeigt wird, und wobei nachfolgend durch eine entsprechende Tastschalterbetätigung der gesamte, auf die Kopfzeile bezogene Speicherinhalt übertragen und angezeigt wird. Dabei kann durch eine Menüwahl eine bidirektionale Frage/Antwortverbindung zwischen Steuergerät und Anzeigeeinrichtung aufgebaut bzw. gehalten werden. Die gewünschte Funktions- oder Parameteranzeige kann z.B. durch eine Rollfunktion (Scroll up/down) angewählt werden.

Die EP 1 178 394 A2 offenbart eine Anzeigesteuerung zur Ausgabe von Warninformationen in unterschiedlichen grafischen Darstellungen und beinhaltet die Merkmale des Oberbegriffs der Ansprüche 1 und 9.

Weitere Anzeigevorrichtungen sind aus der DE 196 04 351 A1, der DE 197 39 357 A1, der EP 0 978 433 A2 und der EP 0 701 926 A2 bekannt.

Es ist Aufgabe der Erfindung, die Bedienbarkeit eines Kraftfahrzeuges mittels einer Anzeigevorrichtung zu verbessern.

Vorgenannte Aufgabe wird durch ein Steuerungssystem für ein Kraftfahrzeug mit einer Ausgabesteuerung zur Ausgabe einer den Betrieb des Kraftfahrzeuges betreffenden Information, z.B. an einen Bediener, und mit einer räumlich von der Ausgabesteuerung getrennten Funktionssteuerung zur Erzeugung und/oder Bereitstellung der den Betrieb des Kraftfahrzeuges betreffenden Information gelöst, insbesondere wobei die den Betrieb des Kraftfahrzeuges betreffende Information mittels einer, vorteilhafterweise als Bussystem ausgebildeten, Kommunikationsverbindung von der Funktionssteuerung an die Ausgabesteuerung übertragbar ist, wobei die Ausgabesteuerung einen Informationsspeicher zur Speicherung der den Betrieb des Kraftfahrzeuges betreffenden Information umfasst, und wobei die den Betrieb des Kraftfahrzeuges betreffende Information, insbesondere bei einer Aufforderung zur Ausgabe der die den Betrieb des Kraftfahrzeuges betreffenden Information, aus dem Informationsspeicher auslesbar und von der Ausgabesteuerung, z.B. an den Bediener, ausgebbar ist, wobei die den Betrieb des Kraftfahrzeuges betreffende Information mittels einer, vorteilhafterweise als Bussystem ausgebildeten, Kommunikationsverbindung unabhängig von einer, z.B. an den Bediener erfolgten, Aufforderung zur Ausgabe der die den Betrieb des Kraftfahrzeuges betreffenden Information von der Funktionssteuerung an die Ausgabesteuerung übertragbar ist, und wobei die den Betrieb des Kraftfahrzeuges betreffende Information bei einer Veränderung der den Betrieb des Kraftfahrzeuges betreffenden Information durch die Funktionssteuerung von der Funktionssteuerung an die Ausgabesteuerung übertragen wird.

Eine den Betrieb des Kraftfahrzeuges betreffende Information kann eine Geschwindigkeit, eine Motordrehzahl, ein Öldruck, eine Kühlmitteltemperatur, eine Fahrzeugneigung, eine Innenraumtemperatur, ein im Empfangsbereich des Kraftfahrzeuges liegender Radiosender, der geographische Ort des Kraftfahrzeuges, ein Schließzustand von Türen, ein ausgewählter Musiktitel o.ä. sein. Eine den Betrieb des Kraftfahrzeuges betreffende Information kann aber auch eine aktuelle Uhrzeit sein.

In vorteilhafter Ausgestaltung der Erfindung ist die den Betrieb des Kraftfahrzeuges betreffende Information bei einer von dem Bediener erfolgten Aufforderung zur Ausgabe der die den Betrieb des Kraftfahrzeuges betreffenden Information aus dem Informationsspeicher auslesbar und von der Ausgabesteuerung an den Bediener ausgebbar.

In weiterhin vorteilhafter Ausgestaltung der Erfindung ist die den Betrieb des Kraftfahrzeuges betreffende Information nach Ablauf einer, insbesondere einstellbaren, Wiederholzeit von der Funktionssteuerung an die Ausgabesteuerung übertragbar.

In weiterhin vorteilhafter Ausgestaltung der Erfindung ist mittels der Ausgabesteuerung überwachbar, ob innerhalb der Wiederholzeit die den Betrieb des Kraftfahrzeuges betreffende Information von der Funktionssteuerung an die Ausgabesteuerung übertragen worden ist. Dabei ist in weiterhin vorteilhafter Ausgestaltung der Erfindung die den Betrieb des Kraftfahrzeuges betreffende Information, insbesondere bei einer Aufforderung zur Ausgabe der den Betrieb des Kraftfahrzeuges betreffenden Information, aus dem Informationsspeicher nicht von der Ausgabesteuerung, z.B. an den Bediener, ausgebbar, wenn die den Betrieb des Kraftfahrzeuges betreffende Information nicht innerhalb der Wiederholzeit oder einer Karenzzeit von der Funktionssteuerung an die Ausgabesteuerung übertragen worden ist, wobei die Karenzzeit länger ist als die Wiederholzeit.

In weiterhin vorteilhafter Ausgestaltung der Erfindung umfasst die Ausgabesteuerung ein Display zur optischen Darstellung der den Betrieb des Kraftfahrzeuges betreffenden Information.

In weiterhin vorteilhafter Ausgestaltung der Erfindung umfasst die Ausgabesteuerung eine Eingabevorrichtung zur Eingabe einer Anforderung zur Ausgabe und/oder zur optischen Darstellung der den Betrieb des Kraftfahrzeuges betreffenden Information und/oder ist der Ausgabesteuerung eine Eingabevorrichtung zur Eingabe einer Anforderung zur Ausgabe und/oder zur optischen Darstellung der den Betrieb des Kraftfahrzeuges betreffende Information zugeordnet.

Der Informationsspeicher ist in weiterhin vorteilhafter Ausgestaltung der Erfindung Schicht 4, Schicht 5 und/oder - vorteilhafterweise - Schicht 6 des ISO/OSI Schichten-Modells (ISO 7498) zugeordnet. Der Informationsspeicher ist in weiterhin vorteilhafter Ausgestaltung der Erfindung zwischen der Kommunikationsverbindung und einer Schnittstelle, deren Datenformat von der konkreten Ausgestaltung der Kommunikationsverbindung unabhängig ist, angeordnet. Ein zusätzlicher Informationsspeicher kann jedoch auch jenseits dieser Schnittstelle angeordnet sein.

Vorgenannte Aufgabe wird - insbesondere in Verbindung mit vorgenannten Merkmalen - zudem durch ein Steuerungssystem für ein Kraftfahrzeug mit einer Ausgabesteuerung zur Ausgabe einer den Betrieb des Kraftfahrzeuges betreffenden Information, z.B. an einen Bediener, und mit einer räumlich von der Ausgabesteuerung getrennten Funktionssteuerung zur Erzeugung und/oder Bereitstellung der den Betrieb des Kraftfahrzeuges betreffenden Information gelöst, insbesondere wobei die den Betrieb des Kraftfahrzeuges betreffende Information mittels einer, vorteilhafterweise als Bussystem ausgebildeten, Kommunikationsverbindung von der Funktionssteuerung an die Ausgabesteuerung übertragbar ist, wobei die Ausgabesteuerung einen Informationsspeicher zur Speicherung der den Betrieb des Kraftfahrzeuges betreffenden Information umfasst, und wobei die den Betrieb des Kraftfahrzeuges betreffende Information, insbesondere bei einer Aufforderung zur Ausgabe der die den Betrieb des Kraftfahrzeuges betreffenden Information, aus dem Informationsspeicher auslesbar und von der Ausgabesteuerung, z.B. an den Bediener, ausgebbar ist, sofern die den Betrieb des Kraftfahrzeuges betreffende Information innerhalb einer Karenzzeit von der Funktionssteuerung an die Ausgabesteuerung übertragen worden ist.

Vorgenannte Aufgabe wird - insbesondere in Verbindung mit vorgenannten Merkmalen - zudem durch ein Kraftfahrzeug, mit einer Ausgabesteuerung zur Ausgabe einer den Betrieb des Kraftfahrzeuges betreffenden Information, z.B. an einen Bediener, und mit einer räumlich von der Ausgabesteuerung getrennten Funktionssteuerung zur Erzeugung und/oder Bereitstellung der den Betrieb des Kraftfahrzeuges betreffenden Information gelöst, insbesondere wobei die den Betrieb des Kraftfahrzeuges betreffende Information mittels einer, vorteilhafterweise als Bussystem ausgebildeten, Kommunikationsverbindung von der Funktionssteuerung an die Ausgabesteuerung übertragbar ist, wobei die Ausgabesteuerung einen Informationsspeicher zur Speicherung der den Betrieb des Kraftfahrzeuges betreffenden Information umfasst, und wobei die den Betrieb des Kraftfahrzeuges betreffende Information, insbesondere bei einer Aufforderung zur Ausgabe der die den Betrieb des Kraftfahrzeuges betreffenden Information, aus dem Informationsspeicher auslesbar und von der Ausgabesteuerung, z.B. an den Bediener, ausgebbar ist, jedoch insbesondere nur sofern die den Betrieb des Kraftfahrzeuges betreffende Information innerhalb einer Karenzzeit von der Funktionssteuerung an die Ausgabesteuerung übertragen worden ist.

Vorgenannte Aufgabe wird - insbesondere in Verbindung mit vorgenannten Merkmalen - zudem durch ein Verfahren zur Steuerung eines Kraftfahrzeuges mit einer Ausgabesteuerung zur Ausgabe einer den Betrieb des Kraftfahrzeuges betreffenden Information, z.B. an einen Bediener, und mit einer räumlich von der Ausgabesteuerung getrennten Funktionssteuerung zur Erzeugung und/oder Bereitstellung der den Betrieb des Kraftfahrzeuges betreffenden Information gelöst, insbesondere wobei die den Betrieb des Kraftfahrzeuges betreffende Information mittels einer, vorteilhafterweise als Bussystem ausgebildeten, Kommunikationsverbindung von der Funktionssteuerung an die Ausgabesteuerung übertragbar ist, wobei die Ausgabesteuerung einen Informationsspeicher zur Speicherung der den Betrieb des Kraftfahrzeuges betreffenden Information umfasst, wobei die den Betrieb des Kraftfahrzeuges betreffende Information, insbesondere bei einer Aufforderung zur Ausgabe der die den Betrieb des Kraftfahrzeuges betreffenden information, aus dem Informationsspeicher ausgelesen und, z.B. an den Bediener, ausgegeben wird, jedoch insbesondere nur sofern die den Betrieb des Kraftfahrzeuges betreffende Information innerhalb einer Karenzzeit von der Funktionssteuerung an die Ausgabesteuerung übertragen worden ist. Dabei ist vorgesthen, dass die den Betrieb des Kraftfahr- zeuges betreffende Information mittels einer, vorteilhafterweise als Bussystem ausgebildeten, Kommunikationsverbindung, insbesondere zuvor, unabhängig von einer, z.B. an den Bediener erfolgten, Aufforderung zur-Ausgabe der die den Betrieb des Kraftfahrzeuges betreffenden Information von der Funktionssteuerung an die Ausgabesteuerung, insbesondere in den Informationsspeicher übertragen wird, wobei die den Betrieb des Kraftfahr- zeuges betreffende Information bei einer Veränderung der den Betrieb des Kraftfahrzeuges betreffenden Information durch die Funktionssteuerung von der Funktionssteuerung an die Ausgabesteuerung übertragen wird.

In vorteilhafter Ausgestaltung der Erfindung wird die den Betrieb des Kraftfahrzeuges betreffende Information mittels einer, vorteilhafterweise als Bussystem ausgebildeten, Kommunikationsverbindung zuvor von der Funktionssteuerung an die Ausgabesteuerung, insbesondere in den Informationsspeicher übertragen.

In weiterhin vorteilhafter Ausgestaltung der Erfindung wird die den Betrieb des Kraftfahrzeuges betreffende Information bei nach Ablauf einer, insbesondere einstellbaren, Wiederholzeit von der Funktionssteuerung an die Ausgabesteuerung übertragen.

In weiterhin vorteilhafter Ausgestaltung der Erfindung wird mittels der Ausgabesteuerung überwacht, ob innerhalb der Wiederholzeit die den Betrieb des Kraftfahrzeuges betreffende Information von der Funktionssteuerung an die Ausgabesteuerung übertragen worden ist.

In weiterhin vorteilhafter Ausgestaltung der Erfindung wird die den Betrieb des Kraftfahrzeuges betreffende Information, insbesondere bei einer Aufforderung zur Ausgabe der die den Betrieb des Kraftfahrzeuges betreffenden Information, aus dem Informationsspeicher nicht von der Ausgabesteuerung, z.B. an den Bediener, ausgegeben, wenn die den Betrieb des Kraftfahrzeuges betreffende Information nicht innerhalb der Wiederholzeit oder einer Karenzzeit von der Funktionssteuerung an die Ausgabesteuerung übertragen worden ist, wobei die Karenzzeit gleich oder länger ist als die Wiederholzeit.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel für ein Kraftfahrzeug,
- Fig. 2: ein Ausführungsbeispiel für ein Steuerungssystem,
- Fig. 3: ein Ausführungsbeispiel für ein Überwachungsmodul,
- Fig. 4: ein Ausführungsbeispiel für einen in einem Schnittstellenmodul implementierten Ablauf,
- Fig. 5: ein Ausführungsbeispiel für eine mittels einer Eingabevorrichtung dargestellten Grundmaske und
- Fig. 6: ein Ausführungsbeispiel für eine Maske zur Bedienung einer Klimaanlage.

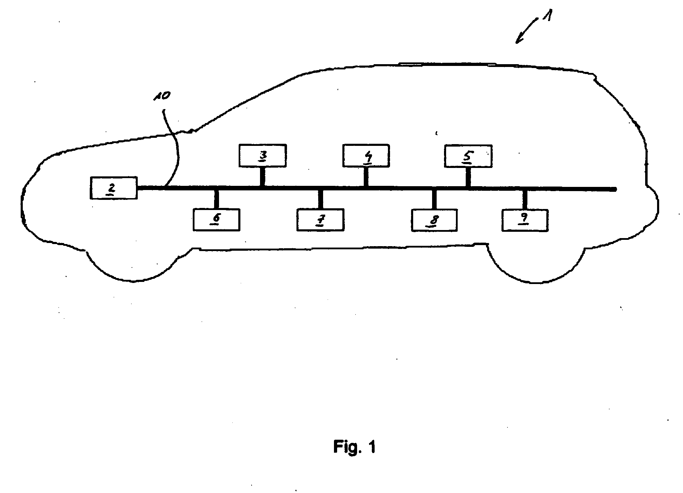

Fig. 1 zeigt ein Ausführungsbeispiel für ein Kraftfahrzeug 1 in einer schematisierten Ansicht. Das Kraftfahrzeug 1 weist eine Motorsteuerung 2, eine Kombianzeige 3 zur Anzeige von Geschwindigkeit, Motordrehzahl, Kühlwassertemperatur u.ä., eine Multifunktionsanzeigevorrichtung 4 mit einem Touchscreen zur Bedienung einer Klimaanlage 6, eines Navigationssystems 7, eines Musikmoduls 8 und eines Telefonmoduls 9 sowie eine akustische Ausgabevorrichtung 5 auf. Die Motorsteuerung 2, die Kombianzeige 3, die Multifunktionsanzeigevorrichtung 4, die Ausgabevorrichtung 5, die Klimaanlage 6, das Navigationssystem 7, das Musikmodul 8 und/oder das Telefonmodul 9 sind zum Austausch von Daten bzw. Informationen über ein Bussystem 10 verbunden. Die Klimaanlage 6, das Navigationssystem 7, das Musikmodul 8 und das Telefonmodul 9 können - wie in Fig. 1 dargestellt - je auf einer separaten Hardware implementiert sein. Sie können jedoch auch alle oder zum Teil auf einer gemeinsamen Hardware implementiert sein.

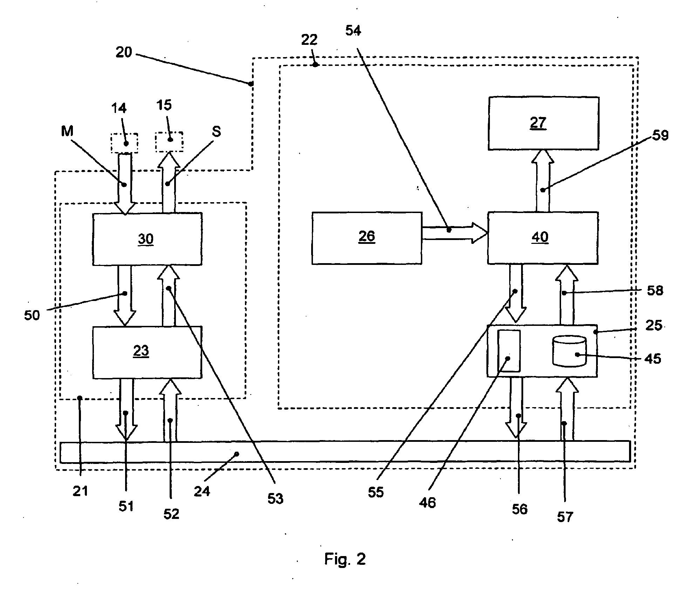

Die Motorsteuerung 2, die Klimaanlage 6, das Navigationssystem 7, das Musikmodul 8 und/oder das Telefonmodul 9 bilden zusammen mit dem Bussystem 10 und der Kombianzeige 3, der Multifunktionsanzeigevorrichtung 4 und/oder der Ausgabevorrichtung 5 ein in Fig. 2 dargestelltes mit Bezugszeichen 20 bezeichnetes Steuersystem. Dabei bezeichnet Bezugszeichen 22 eine von einer Funktionssteuerung 21 zur Erzeugung oder Bereitstellung einer den Betrieb des Kraftfahrzeuges 1 betreffenden Information räumlich getrennte Ausgabesteuerung. Die den Betrieb des Kraftfahrzeuges betreffende Information kann eine Motordrehzahl, ein Öldruck, eine Kühlmitteltemperatur, eine Fahrzeugneigung, ein Abstand zu einem Hindernis, eine Innenraumtemperatur, ein im Empfangsbereich des Kraftfahrzeuges 1 liegender Radiosender, der geographische Ort des Kraftfahrzeuges 1, ein Schließzustand von Türen, eine aktuelle Uhrzeit und/oder ein ausgewählter Musiktitel sein. Die Funktionssteuerung 21 kann der Motorsteuerung 2, der Klimaanlage 6, dem Navigationssystem 7, dem Musikmodul 8 und/oder dem Telefonmodul 9 entsprechen. Die Ausgabesteuerung 22 kann der Kombianzeige 3, dem Touchscreen 4 und/oder der akustischen Ausgabevorrichtung 5 entsprechen. Die den Betrieb des Kraftfahrzeuges betreffende Information ist mittels eines Bussystems 24 von der Funktionssteuerung 21 an die Ausgabesteuerung 22 übertragbar, das dem Bussystem 10 entspricht.

Die Funktionssteuerung 21 umfasst einen Funktionssteuerungsteil zur Steuerung von Funktionen des Kraftfahrzeuges 1, z.B. mittels der Steuerung bzw. Regelung von Aktoren 15 durch Erzeugung von Steuersignalen S und durch Einlesen von von Sensoren 14 erzeugten Messsignalen M. Ein solches Steuersignal S kann ein einer Solltemperatur entsprechendes elektrisches Signal für eine Kühlvorrichtung sein. Ein Messsignal M kann ein einer gemessenen Ist-Temperatur entsprechendes elektrisches Signal sein. Eine derartige Ist-Temperatur kann eine den Betrieb des Kraftfahrzeuges 1 betreffende Information in Sinne der Ansprüche sein. Aber auch eine derartige Solltemperatur kann eine den Betrieb des Kraftfahrzeuges 1 betreffende Information in Sinne der Ansprüche sein. Das Funktionssteuerungsteil 30 dient damit der eigentlichen Erzeugung bzw. Bereitstellung der den Betrieb des Kraftfahrzeuges 1 betreffenden Information.

Die Funktionssteuerung 21 umfasst ein Schnittstellenmodul 23 zur Übersetzung einer auszugebenden Information 50 in einem von dem Funktionssteuerungsteil 30 erzeugbaren Format in eine Information 51 im Übertragungsformat des Bussystems 24 und/oder zur Übersetzung einer Information 52 im Übertragungsformat des Bussystems 24 in eine Information 53 in einem von dem Funktionssteuerungsteil 30 einlesbarem Format.

Die Ausgabesteuerung 22 umfasst ein Display 27 zur optischen Darstellung einer den Betrieb des Kraftfahrzeuges betreffenden Information, wie z.B. der Motordrehzahl, dem Öldruck, der Kühlmitteltemperatur, der Fahrzeugneigung, einem Abstand zu einem Hindernis, einer Innenraumtemperatur, eines im Empfangsbereich des Kraftfahrzeuges 1 liegenden Radiosenders, des geographischen Ortes des Kraftfahrzeuges 1, einem Schließzustand von Türen, der aktuellen Uhrzeit und/oder des ausgewählten Musiktitels. Zur Ansteuerung des Displays 27 umfasst die Ausgabesteuerung 22 einen Ausgabesteuerungsteil 40, wobei von dem Ausgabesteuerungsteil 40 ein Displaysteuerungssignal 59 ausgegeben wird.

Die Ausgabesteuerung 22 umfasst im vorliegenden Ausführungsbeispiel eine Eingabevorrichtung 26 zur Eingabe einer Anforderung zur optischen Darstellung einer den Betrieb des Kraftfahrzeuges betreffenden Information und zur Ausgabe eines entsprechenden Anforderungssignals 54. Die Eingabevorrichtung 26 kann - wie im vorliegenden Ausführungsbeispiel - Bestandteil der Ausgabesteuerung 22 sein. Die Eingabevorrichtung 26 kann z.B. neben dem Display 27 angeordnete Bedienelemente umfassen. Die Eingabevorrichtung 26 kann aber auch einen auf dem Display 27 angeordneten Touchscreen umfassen. Die Eingabevorrichtung 26 kann aber auch räumlich von der Ausgabesteuerung 22 angeordnet und dieser lediglich zugeordnet sein.

Die Ausgabesteuerung 22 umfasst weiterhin ein Schnittstellenmodul 25 zur Übersetzung einer Information 55 in einem von dem Ausgabesteuerungsteil 40 erzeugbaren Format in eine Information 56 im Übertragungsformat des Bussystems 24 und/oder zur Übersetzung einer Information 57 im Übertragungsformat des Bussystems 24 in eine Information 58 in einem von dem Ausgabesteuerungsteil 40 einlesbaren Format.

Das von dem Funktionssteuerungsteil 21 bzw. von dem Ausgabesteuerungsteil 22 einlesbare bzw. ausgebbare Format ist von der konkreten Ausgestaltung des Bussystems 10 bzw. 24 unabhängig. So kann das Bussystem 10 bzw. das Bussystem 24 ein CAN-Bussystem, ein MOST-Bussystem, LIN-Bussystem o.ä. sein. Das von dem Funktionssteuerungsteil 21 bzw. von dem Ausgabesteuerungsteil 22 einlesbare bzw. ausgebbare Format bleibt von einer solchen konkreten Ausgestaltung unberührt.

Das Schnittstellenmodul 25 umfasst einen Informationsspeicher 45 zur Speicherung einer oder mehrerer den Betrieb des Kraftfahrzeuges 1 betreffenden Informationen. Diese den Betrieb des Kraftfahrzeuges 1 betreffenden Informationen werden von der Funktionssteuerung 21 an die Ausgabesteuerung 22 übertragen, wobei - im fehlerfreien Betrieb - eine Übertragung immer dann erfolgt, wenn sich eine entsprechende den Betrieb des Kraftfahrzeuges betreffende Information verändert hat, oder wenn seit der letzten Übertragung eine vorbestimmte Wiederholzeit verstrichen ist. Die Wiederholzeit kann für unterschiedliche den Betrieb des Kraftfahrzeuges betreffende Informationen unterschiedlich sein. Die Wiederholzeit beträgt insbesondere mehr als 1 s.

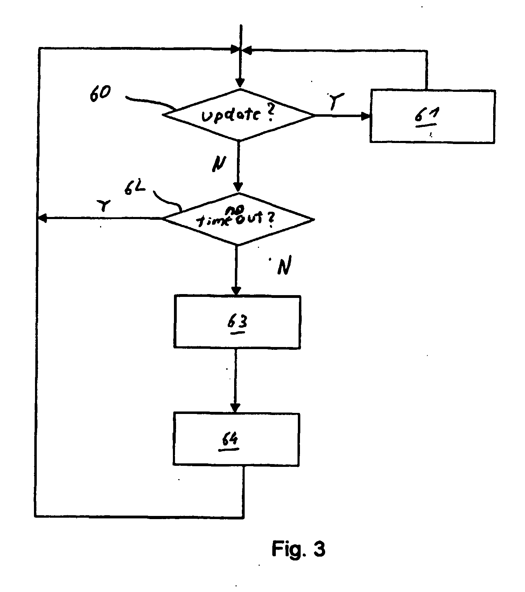

Das Schnittstellenmodul 25 umfasst ein - mit Bezugnahme auf Fig. 3 in Form eines beispielhaften Ablaufs näher erläutertes - Überwachungsmodul 46 zur Überwachung vorgenannter Übertragung der den Betrieb des Kraftfahrzeuges betreffenden Informationen. Der in Fig. 3 dargestellte beispielhafte Ablauf beginnt mit einer Abfrage 60, ob ein neuer Wert für eine zu überwachende den Betrieb des Kraftfahrzeuges betreffende Information empfangen worden ist.

Ist kein neuer Wert für eine zu überwachende den Betrieb des Kraftfahrzeuges betreffende Information empfangen worden, so folgt der Abfrage 60 eine Abfrage 62, ob die zu überwachende den Betrieb des Kraftfahrzeuges betreffende Information das letzte Mal innerhalb einer Karenzzeit von der Funktionssteuerung 21 an die Ausgabesteuerung 22 übertragen worden ist, wobei die Karenzzeit gleich oder länger ist als die Wiederholzeit. Die Karenzzeit kann z.B. das Doppelte oder Dreifache der Wiederholzeit betragen.

Ist die zu überwachende den Betrieb des Kraftfahrzeuges betreffende Information das letzte Mal innerhalb der Karenzzeit von der Funktionssteuerung 21 an die Ausgabesteuerung 22 übertragen worden, so folgt der Abfrage 62 die Anfrage 60. Ist dagegen die zu überwachende den Betrieb des Kraftfahrzeuges betreffende Information das letzte Mal nicht (mehr) innerhalb der Karenzzeit von der Funktionssteuerung 21 an die Ausgabesteuerung 22 übertragen worden, so folgt der Abfrage 62 ein Schritt 63, in dem eine Speicherfehlervariable auf einen Wert ERROR gesetzt wird. Dem Schritt 63 folgt ein Schritt 64, in dem von der Ausgabesteuerung 22 eine Aufforderung zur Übertragung der zu überwachenden den Betrieb des Kraftfahrzeuges betreffenden Information an die Funktionssteuerung 21 gesendet wird. Dem Schritt 64 folgt die Abfrage 60.

Ergibt die Abfrage 60, dass ein neuer Wert für eine zu überwachende den Betrieb des Kraftfahrzeuges betreffende Information empfangen worden ist, so folgt der Abfrage 60 ein Schritt 61, in dem die Speicherfehlervariable auf einen Wert NOERROR gesetzt wird.

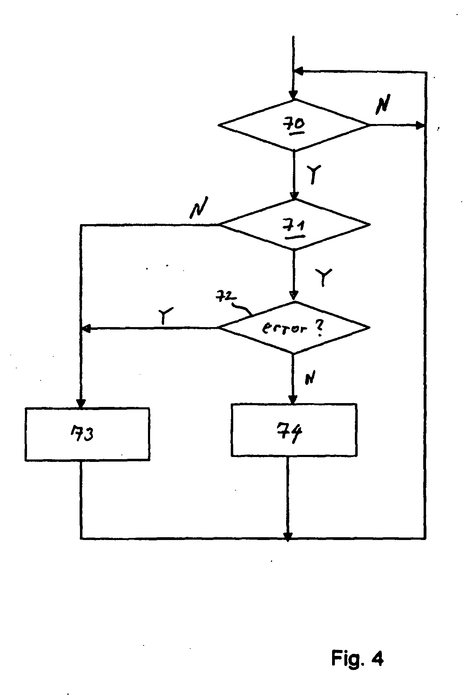

Erfolgt mittels der Eingabevorrichtung 26 gemäß Fig. 2 eine Anforderung zur optischen Darstellung einer bestimmten den Betrieb des Kraftfahrzeuges betreffenden Information, so fordert das Ausgabesteuerungsteil 40 mittels einer Anforderung 55 in einem von dem Ausgabesteuerungsteil 40 erzeugbaren Format vom dem Schnittstellenmodul 25 diese den Betrieb des Kraftfahrzeuges betreffende Information an. In dem Schnittstellenmodul 25 ist ein im folgenden mit Bezugnahme auf Fig. 4 erläuterter Ablauf implementiert. Dieser beginnt mit einer (zyklischen) Abfrage 70, ob eine von dem Ausgabesteuerungsteil 40 gesendete Information 55 erhalten worden ist. Ist dies der Fall, so folgt der Abfrage 70 eine Abfrage 71, andernfalls erfolgt erneut die Abfrage 70.

Mittels der Abfrage 71 wird abgefragt, ob die angeforderte den Betrieb des Kraftfahrzeuges betreffende Information eine in dem Informationsspeicher 45 gespeicherte Information ist. Ist die angeforderte den Betrieb des Kraftfahrzeuges betreffende Information keine in dem Informationsspeicher 45 gespeicherte Information, so folgt der Abfrage 71 ein Schritt 73, in dem die die angeforderte den Betrieb des Kraftfahrzeuges betreffende Information von der Funktionssteuerung 21 angefragt wird. Anschließend folgt dem Schritt 73 die Abfrage 70. Sobald die angeforderte den Betrieb des Kraftfahrzeuges betreffende Information von der Funktionssteuerung 21 gesendet und von dem Schnittstellenmodul 25 empfangen worden ist, wird diese dem Ausgabesteuerungsteil 40 bereit gestellt.

Ist die angeforderte den Betrieb des Kraftfahrzeuges betreffende Information eine in dem Informationsspeicher 45 gespeicherte Information, so folgt der Abfrage 71 eine Abfrage 72, ob die Speicherfehlervariable auf den Wert ERROR gesetzt ist. Ist die Speicherfehlervariable auf den Wert ERROR gesetzt, so folgt der Abfrage 72 der Schritt 73. Ist die Speicherfehlervariable dagegen nicht auf den Wert ERROR gesetzt, so folgt der Abfrage 72 ein Schritt 74, in dem die angeforderte den Betrieb des Kraftfahrzeuges betreffende Information aus dem Informationsspeicher 45 ausgelesen und dem Ausgabesteuerungsteil 40 bereit gestellt wird. Dem Schritt 74 folgt die Abfrage 70.

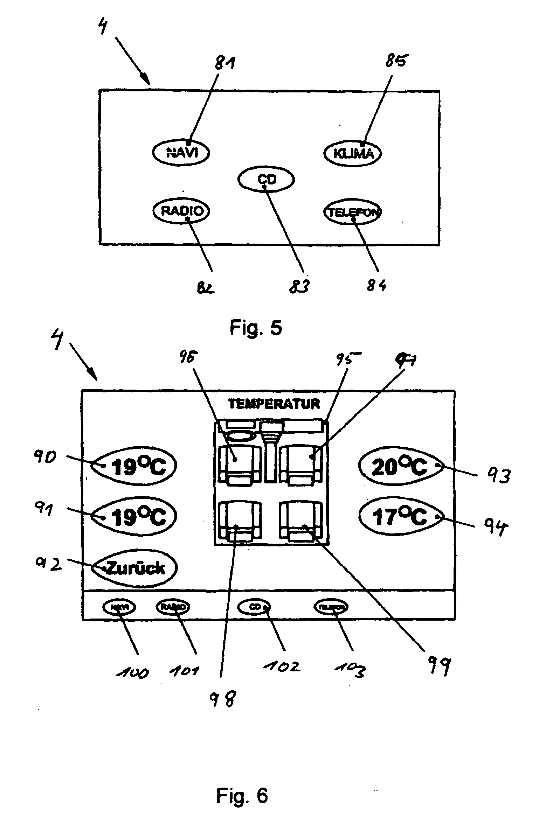

Diesen Ablauf verdeutlichen Fig. 5 und Fig. 6 am Beispiel eines Zusammenwirkens zwischen der Klimaanlage 6 und der Multifunktionsanzeigevorrichtung 4, die im in dem Fig. 5 und Fig. 6 zugrunde liegenden Ausführungsbeispiel einen auf einem Display angeordneten Touchscreen umfasst. In Fig. 5 ist die Multifunktionsanzeigevorrichtung 4 in einem eine Grund-Maske anzeigenden Zustand dargestellt. Dabei zeigt die Multifunktionsanzeigevorrichtung 4 fünf durch Ellipsen ausgeführte Bedienelemente 81, 82, 83, 84 und 85 an. Durch Berühren bzw. Drücken des Bedienelementes 81 in Fig. 5 wird eine Maske zur Bedienung des Navigationssystems aufgerufen, durch Berühren bzw. Drücken des Bedienelementes 82 in Fig. 5 wird eine Maske zur Bedienung eines Radios (als Teil des Musikmoduls 8) aufgerufen, durch Berühren bzw. Drücken des Bedienelementes 83 in Fig. 5 wird eine Maske zur Bedienung eines CD-Spielers (als Teil des Musikmoduls 8) aufgerufen und durch Berühren bzw. Drücken des Bedienelementes 84 in Fig. 5. wird eine Maske zur Bedienung des Telefonmoduls 9 aufgerufen.

Durch Berühren bzw. Drücken des Bedienelementes 85 in Fig. 5 wird eine in Fig. 6 dargestellte Maske zur Bedienung der Klimaanlage 6 aufgerufen. In der in Fig. 6 dargestellten Maske sind Temperaturangaben der einzelnen Orte im Fahrzeuginnenraum zusammen mit Bedienelementen 90, 91, 92, 93 und 94 dargestellt, wobei die Temperaturangaben sich auf aktuell eingestellte Temperaturen beziehen, die über die Bedienelemente 90, 91, 93 und 94 verändert werden können.

Die Darstellung gemäß Fig. 6 mit der Überschrift ,TEMPERATUR' und der Anzeige des Innenraumes 95 des Kraftfahrzeuges 1 macht deutlich, dass die Temperatur im Fahrzeuginneren individuell und sitzplatzbezogen einstellbar ist. Das Bedienelement 90 zeigt für den vorderen Fahrzeugführersitz 96 an, dass eine Soll-Temperatur von 19°C eingestellt ist. Das Bedienelement 93 zeigt für den vorderen Beifahrersitz 97 an, dass eine Soll-Temperatur von 20°C eingestellt ist. Für die Fondsitze 98 und 99 sind auf der linken Seite eine Soll-Temperatur von 19°C und auf der rechten Seite eine Soll-Temperatur von 17°C eingestellt. Das Bedienelement 92 hat eine Zuweisung, d. h. eine Funktionszuweisung, die mit "Zurück" (auf die nächst höhere Menüdarstellung, also im vorliegenden Fall auf die Maske gemäß Fig. 5) dargestellt ist.

Bevor der Übergang von der in Fig. 5 dargestellten Grund-Maske zur Darstellung gemäß Fig. 6 erfolgt, müssen die in der der Klimaanlage 6 zur Regelung verwendeten und in den Bedienelementen 90, 91, 92 und 94 anzuzeigenden Soll-Temperaturen bekannt sein. Diese sind im fehlerfreien Betrieb in dem Informationsspeicher 45 abgespeichert und werden zur Darstellung auf der Multifunktionsanzeigevorrichtung 4 aus dem Informationsspeicher 45 ausgelesen.

In der Darstellung gemäß Fig. 6 zeigt die Multifunktionsanzeigevorrichtung 4 den Bedienelementen 81, 82, 83 und 84 entsprechende Bedienelemente 100, 101, 102 und 103 an.

Die Elemente und Geräte in den Figuren sind unter Berücksichtigung von Einfachheit und Klarheit und nicht notwendigerweise maßstabsgetreu gezeichnet. So sind z.B. die Größenordnungen einiger Elemente bzw. Geräte übertrieben gegenüber anderen Elementen bzw. Geräte dargestellt, um das Verständnis der Ausführungsbeispiele der vorliegenden Erfindung zu verbessern.

### BEZUGSZEICHENLISTE

- 1: Kraftfahrzeug
- 2: Motorsteuerung
- 3: Kombianzeige
- 4: Multifunktionsanzeigevorrichtung
- 5: akustische Ausgabevorrichtung
- 6: Klimaanlage
- 7: Navigationssystem
- 8: Musikmodul
- 9: Telefonmodul
- 10,24: Bussystem
- 14: Sensor
- 15: Aktor
- 20: Steuersystem
- 21: Funktionssteuerung
- 22: Ausgabesteuerung
- 23, 25: Schnittstellenmodul
- 26: Eingabevorrichtung
- 27: Display
- 30: Funktionssteuerungsteil
- 40: Ausgabesteuerungsteil
- 45: Informationsspeicher
- 46: Überwachungsmodul
- 50: Information in einem von einem Funktionssteuerungsteil erzeugbaren Format
- 51, 52, 56, 57: Information im Übertragungsformat des Bussystems
- 53: Information in einem von einem Funktionssteuerungsteil einlesbaren Format
- 54: Anforderungssignal
- 55: Information in einem von einem Ausgabesteuerungsteil erzeugbaren Format
- 58: Information in einem von einem Ausgabesteuerungsteil einlesbaren Format
- 59: Displaysteuerungssignal
- 60, 62, 70, 71, 72: Abfrage
- 61, 63, 64, 73, 74: Schritt
- 81, 82, 83, 84,:
- 85, 90, 91, 92,:
- 93, 94, 100, 101,:
- 102, 103,: Bedienelement
- 95: Anzeige eines Innenraumes eines Kraftfahrzeuges
- 96: Fahrzeugführersitz
- 97: Beifahrersitz
- 98, 99: Fondsitz

- M: Messsignal
- S: Steuersignal

## Patentansprüche

1. Steuerungssystem (20) für ein Kraftfahrzeug (1) mit einer Ausgabesteuerung (22) zur Ausgabe einer den Betrieb des Kraftfahrzeuges (1) betreffenden Information und mit einer räumlich von der Ausgabesteuerung (22) getrennten Funktionssteuerung (21) zur Erzeugung oder Bereitstellung der den Betrieb des Kraftfahrzeuges (1) betreffenden Information, wobei die Ausgabesteuerung (22) einen Informationsspeicher (45) zur Speicherung der den Betrieb des Kraftfahrzeuges (1) betreffenden Information umfasst, wobei die den Betrieb des Kraftfahrzeuges (1) betreffende Information aus dem Informationsspeicher (45) auslesbar und von der Ausgabesteuerung (22) ausgebbar ist, wobei die den Betrieb des Kraftfahrzeuges (1) betreffende Information mittels einer Kommunikationsverbindung (10, 24) unabhängig von einer Aufforderung zur Ausgabe der die den Betrieb des Kraftfahrzeuges (1) betreffenden Information von der Funktionssteuerung (21) an die Ausgabesteuerung (22) übertragbar ist, **dadurch gekennzeichnet, dass** die den Betrieb des Kraftfahrzeuges (1) betreffende Information bei einer Veränderung der den Betrieb des Kraftfahrzeuges (1) betreffenden Information durch die Funktionssteuerung (21) von der Funktionssteuerung (21) an die Ausgabesteuerung (22) übertragen wird.

2. Steuerungssystem (20) nach Anspruch 1, **dadurch gekennzeichnet, dass** die den Betrieb des Kraftfahrzeuges (1) betreffende Information bei einer Aufforderung zur Ausgabe der die den Betrieb des Kraftfahrzeuges (1) betreffenden Information aus dem Informationsspeicher (45) auslesbar und von der Ausgabesteuerung (22) ausgebbar ist.

3. Steuerungssystem (20) nach Anspruch 1 oder 2, **dadurch gekennzeichnet, dass** die den Betrieb des Kraftfahrzeuges (1) betreffende Information nach Ablauf einer Wiederholzeit von der Funktionssteuerung (21) an die Ausgabesteuerung (22) übertragbar ist.

4. Steuerungssystem (20) nach Anspruch 3, **dadurch gekennzeichnet, dass** mittels der Ausgabesteuerung (22) überwachbar ist, ob innerhalb der Wiederholzeit die den Betrieb des Kraftfahrzeuges (1) betreffende Information von der Funktionssteuerung (21) an die Ausgabesteuerung (22) übertragen worden ist.

5. Steuerungssystem (20) nach Anspruch 3 oder 4, **dadurch gekennzeichnet, dass** die den Betrieb des Kraftfahrzeuges (1) betreffende Information aus dem Informationsspeicher (45) nicht von der Ausgabesteuerung (22) ausgebbar ist, wenn die den Betrieb des Kraftfahrzeuges (1) betreffende Information nicht innerhalb der Wiederholzeit oder einer Karenzzeit von der Funktionssteuerung (21) an die Ausgabesteuerung (22) übertragen worden ist, wobei die Karenzzeit länger ist als die Wiederholzeit.

6. Steuerungssystem (20) nach einem der vorhergehenden Ansprüche, **dadurch gekennzeichnet, dass** die Ausgabesteuerung (22) ein Display (27) zur optischen Darstellung der den Betrieb des Kraftfahrzeuges (1) betreffenden Information umfasst.

7. Steuerungssystem (20) nach einem der vorhergehenden Ansprüche, **dadurch gekennzeichnet, dass** die Ausgabesteuerung (22) eine Eingabevorrichtung (26) zur Eingabe einer Anforderung zur Ausgabe und/oder zur optischen Darstellung der den Betrieb des Kraftfahrzeuges (1) betreffenden Information umfasst.

8. Kraftfahrzeug, **dadurch gekennzeichnet, dass** es ein Steuerungssystem (20) nach einem der vorhergehenden Ansprüche aufweist.

9. Verfahren zur Steuerung eines Kraftfahrzeuges (1) mit einer Ausgabesteuerung (22) zur Ausgabe einer den Betrieb des Kraftfahrzeuges (1) betreffenden Information und mit einer räumlich von der Ausgabesteuerung (22) getrennten Funktionssteuerung (21) zur Erzeugung oder Bereitstellung der den Betrieb des Kraftfahrzeuges (1) betreffenden Information, wobei die Ausgabesteuerung (22) einen Informationsspeicher (45) zur Speicherung der den Betrieb des Kraftfahrzeuges (1) betreffenden Information umfasst, wobei die den Betrieb des Kraftfahrzeuges (1) betreffende Information aus dem Informationsspeicher (45) ausgelesen und ausgegeben wird, wobei die den Betrieb des Kraftfahrzeuges (1) betreffende Information mittels einer Kommunikationsverbindung (10, 24) unabhängig von einer Aufforderung zur Ausgabe der die den Betrieb des Kraftfahrzeuges (1) betreffenden Information von der Funktionssteuerung (21) an die Ausgabesteuerung (22), insbesondere in den Informationsspeicher (45), übertragen wird, **dadurch gekennzeichnet, dass** die den Betrieb des Kraftfahrzeuges (1) betreffende Information bei einer Veränderung der den Betrieb des Kraftfahrzeuges (1) betreffenden Information durch die Funktionssteuerung (21) von der Funktionssteuerung (21) an die Ausgabesteuerung (22) übertragen wird.

10. Verfahren nach Anspruch 9, **dadurch gekennzeichnet, dass** die den Betrieb des Kraftfahrzeuges (1) betreffende Information mittels einer Kommunikationsverbindung (10, 24) zuvor von der Funktionssteuerung (21) an die Ausgabesteuerung (22), insbesondere in den Informationsspeicher (45), übertragen wird.

11. Verfahren nach Anspruch 9 oder 10, **dadurch gekennzeichnet, dass** die den Betrieb des Kraftfahrzeuges (1) betreffende Information nach Ablauf einer Wiederholzeit von der Funktionssteuerung (21) an die Ausgabesteuerung (22) übertragen wird.

12. Verfahren nach Anspruch 11, **dadurch gekennzeichnet, dass** mittels der Ausgabesteuerung (22) überwacht wird, ob innerhalb der Wiederholzeit die den Betrieb des Kraftfahrzeuges (1) betreffende Information von der Funktionssteuerung (21) an die Ausgabesteuerung (22) übertragen worden ist.

13. Verfahren nach Anspruch 11 oder 12, **dadurch gekennzeichnet, dass** die den Betrieb des Kraftfahrzeuges (1) betreffende Information aus dem Informationsspeicher (45) nicht von der Ausgabesteuerung (22) ausgegeben wird, wenn die den Betrieb des Kraftfahrzeuges (1) betreffende Information nicht innerhalb der Wiederholzeit oder einer Karenzzeit von der Funktionssteuerung (21) an die Ausgabesteuerung (22) übertragen worden ist, wobei die Karenzzeit länger ist als die Wiederholzeit.

## Claims

1. Control system (20) for a motor vehicle (1) with an output control unit (22) for outputting information relating to operation of the motor vehicle (1) and with a function control unit (21), spatially separated from the output control unit (22), for generating or providing the information relating to operation of the motor vehicle (1), the output control unit (22) including an information memory (45) for storing the information relating to operation of the motor vehicle (1), the information relating to operation of the motor vehicle (1) being readable from the information memory (45) and being outputtable by the output control unit (22) and the information relating to operation of the motor vehicle (1) being transmittable by means of a communication link (10, 24) from the function control unit (21) to the output control unit (22) independently of a request for outputting of the information relating to operation of the motor vehicle (1), **characterised in that**, in the event of a change of the information relating to operation of the motor vehicle (1) by the function control unit (21), the information relating to operation of the motor vehicle (1) is transmitted from the function control unit (21) to the output control unit (22).

2. Control system (20) according to Claim 1, **characterised in that**, in the event of a request for outputting of the information relating to operation of the motor vehicle (1), the information relating to operation of the motor vehicle (1) is readable from the information memory (45) and is outputtable by the output control unit (22).

3. Control system (20) according to Claim 1 or 2, **characterised in that** the information relating to operation of the motor vehicle (1) is transmittable from the function control unit (21) to the output control unit (22) upon expiry of a repeat time.

4. Control system (20) according to Claim 3, **characterised in that** it can be monitored by means of the output control unit (22) whether the information relating to operation of the motor vehicle (1) has been transmitted from the function control unit (21) to the output control unit (22) within the repeat time.

5. Control system (20) according to Claim 3 or 4, **characterised in that** the information relating to operation of the motor vehicle (1) cannot be outputted from the information memory (45) by the output control unit (22) if the information relating to operation of the motor vehicle (1) has not been transmitted from the function control unit (21) to the output control unit (22) within the repeat time or within a waiting time, the waiting time being longer than the repeat time.

6. Control system (20) according to any one of the preceding claims, **characterised in that** the output control unit (22) includes a display (27) for optical representation of the information relating to operation of the motor vehicle (1).

7. Control system (20) according to any one of the preceding claims, **characterised in that** the output control unit (22) includes an input device (26) for inputting a request for the outputting and/or optical representation of the information relating to operation of the motor vehicle (1).

8. Motor vehicle, **characterised in that** it has a control system (20) according to any one of the preceding claims.

9. Method for controlling a motor vehicle (1) with an output control unit (22) for outputting information relating to operation of the motor vehicle (1) and with a function control unit (21), spatially separated from the output control unit (22), for generating or providing the information relating to operation of the motor vehicle (1), the output control unit (22) including an information memory (45) for storing the information relating to operation of the motor vehicle (1), the information relating to operation of the motor vehicle (1) being read and outputted from the information memory (45) and the information relating to operation of the motor vehicle (1) being transmitted by means of a communication link (10, 24) from the function control unit (21) to the output control unit (22), in particular into the information memory (45), independently of a request for outputting of the information relating to operation of the motor vehicle (1), **characterised in that**, in the event of a change of the information relating to operation of the motor vehicle (1) by the function control unit (21), the information relating to operation of the motor vehicle (1) is transmitted from the function control unit (21) to the output control unit (22).

10. Method according to Claim 9, **characterised in that** the information relating to operation of the motor vehicle (1) is previously transmitted by means of a communication link (10, 24) from the function control unit (21) to the output control unit (22), in particular into the information memory (45).

11. Method according to Claim 9 or 10, **characterised in that** the information relating to operation of the motor vehicle (1) is transmitted from the function control unit (21) to the output control unit (22) upon expiry of a repeat time.

12. Method according to Claim 11, **characterised in that** it is monitored by means of the output control unit (22) whether the information relating to operation of the motor vehicle (1) has been transmitted from the function control unit (21) to the output control unit (22) within the repeat time.

13. Method according to Claim 11 or 12, **characterised in that** the information relating to operation of the motor vehicle (1) is not outputted from the information memory (45) by the output control unit (22) if the information relating to operation of the motor vehicle (1) has not been transmitted from the function control unit (21) to the output control unit (22) within the repeat time or within a waiting time, the waiting time being longer than the repeat time.

## Revendications

1. Système de commande (20) pour un véhicule automobile (1) doté d'une commande d'émission (22) servant à émettre une information concernant le fonctionnement du véhicule automobile (1) et doté d'une commande de fonction (21) séparée spatialement de la commande d'émission (22) servant à générer ou à fournir l'information concernant le fonctionnement du véhicule automobile (1), la commande d'émission (22) comportant une dispositif d'enregistrement d'information (45) servant à enregistrer l'information concernant le fonctionnement du véhicule automobile (1), l'information concernant le fonctionnement du véhicule automobile (1) pouvant être extraite du dispositif d'enregistrement d'information (45) et pouvant être émise par la commande d'émission (22), l'information concernant le fonctionnement du véhicule automobile (1) pouvant être transmise de la commande de fonction (21) à la commande d'émission (22) au moyen d'une liaison de communication (10, 24) indépendamment de la requête pour l'émission de l'information concernant le fonctionnement du véhicule automobile (1), **caractérisé en ce que** l'information concernant le fonctionnement du véhicule automobile (1) est transmise, par la commande de fonction (21), de la commande de fonction (21) à la commande d'émission (22) en cas de modification de l'information concernant le fonctionnement du véhicule automobile (1).

2. Système de commande (20) selon la revendication 1, **caractérisé en ce que** l'information concernant le fonctionnement du véhicule automobile (1) peut être extraite du dispositif d'enregistrement d'information (45) et émise par la commande d'émission (22) en cas de requête pour l'émission de l'information concernant le fonctionnement du véhicule automobile (1).

3. Système de commande (20) selon la revendication 1 ou 2, **caractérisé en ce que** l'information concernant le fonctionnement du véhicule automobile (1) peut être transmise, une fois le temps de répétition écoulé, de la commande de fonction (21) à la commande d'émission (22).

4. Système de commande (20) selon la revendication 3, **caractérisé en ce qu'**il est possible de surveiller au moyen de la commande d'émission (22) si l'information concernant le fonctionnement du véhicule automobile (1) a été transmise de la commande de fonction (21) à la commande d'émission (22) au cours du temps de répétition.

5. Système de commande (20) selon la revendication 3 ou 4, **caractérisé en ce que** l'information concernant le fonctionnement du véhicule automobile (1) provenant du dispositif d'enregistrement d'information (45) ne peut pas être émise par la commande d'émission (22), lorsque l'information concernant le fonctionnement du véhicule automobile (1) n'a pas été transmise de la commande de fonction (21) à la commande d'émission (22) au cours du temps de répétition ou au cours du temps de carence, la durée de carence étant plus longue que la durée de répétition.

6. Système de commande (20) selon l'une quelconque des revendications précédentes, **caractérisé en ce que** la commande d'émission (22) comporte un écran (27) servant à obtenir une représentation visuelle de l'information concernant le fonctionnement du véhicule automobile (1).

7. Système de commande (20) selon l'une quelconque des revendications précédentes, **caractérisé en ce que** la commande d'émission (22) comporte un dispositif d'entrée (26) servant à saisir une requête pour l'émission et/ou la représentation visuelle de l'information concernant le fonctionnement du véhicule automobile (1).

8. Véhicule automobile, **caractérisé en ce qu'**il présente un système de commande (20) selon l'une quelconque des revendications précédentes.

9. Procédé pour commander un véhicule automobile (1) comprenant une commande d'émission (22) servant à émettre une information concernant le fonctionnement du véhicule automobile (1) et comprenant une commande de fonction (21) séparée spatialement de la commande d'émission (22), servant à générer ou à fournir l'information concernant le fonctionnement du véhicule automobile (1), la commande d'émission (22) comportant un dispositif d'enregistrement d'information (45) servant à enregistrer l'information concernant le fonctionnement du véhicule automobile (1), l'information concernant le fonctionnement du véhicule automobile (1) étant extraite et transmise à partir du dispositif d'enregistrement d'information (45), l'information concernant le fonctionnement du véhicule automobile (1) étant transmise de la commande de fonction (21) à la commande d'émission (22), en particulier dans le dispositif d'enregistrement d'information (45) au moyen d'une liaison de communication (10, 24) indépendamment de la requête pour l'émission de l'information concernant le fonctionnement du véhicule automobile (1), **caractérisé en ce que** l'information concernant le fonctionnement du véhicule automobile (1) est transmise, par la commande de fonction (21), de la commande de fonction (21) à la commande d'émission (22) en cas de modification de l'information concernant le fonctionnement du véhicule automobile (1).

10. Procédé selon la revendication 9, **caractérisé en ce que** l'information concernant le fonctionnement du véhicule automobile (1) est transmise, au moyen d'une liaison de communication (10, 24) en premier lieu de la commande de fonction (21) à la commande d'émission (22), en particulier dans le dispositif d'enregistrement d'information (45).

11. Procédé selon la revendication 9 ou 10,
**caractérisé en ce que** l'information concernant le fonctionnement du véhicule automobile (1) est transmise, une fois le temps de répétition écoulé, de la commande de fonction (21) à la commande d'émission (22).

12. Procédé selon la revendication 11, **caractérisé en ce qu'**on surveille au moyen de la commande d'émission (22) si l'information concernant le fonctionnement du véhicule (1) a été transmise de la commande de fonction (21) à la commande d'émission (22) au cours du temps de répétition.

13. Procédé selon la revendication 11 ou 12,
**caractérisé en ce que** l'information concernant le fonctionnement du véhicule (1) provenant du dispositif d'enregistrement d'information (45) n'est pas émise par la commande d'émission (22), lorsque l'information concernant le fonctionnement du véhicule automobile (1) n'a pas été transmise de la commande de fonction (21) à la commande d'émission (22) au cours du temps de répétition ou d'un temps de carence, le temps de carence étant plus long que le temps de répétition.
